# EUROPEAN PATENT SPECIFICATION

(11) **EP 3 621 323 B1**
(45) Date of publication and mention of the grant of the patent: **05.07.2023**
(21) Application number: 18192353.3
(22) Date of filing: 04.09.2018
(51) Int. Cl.: H04W 4/40, H04W 88/06

(54) **METHOD FOR SETTING UP AN ABSTRACTED CHANNEL REPRESENTATION FOR A COMMUNICATION BETWEEN AT LEAST TWO MOVING COMMUNICATION PARTNERS, APPARATUS FOR PERFORMING A STEP OF THE METHOD, VEHICLE AND COMPUTER PROGRAM**
VERFAHREN ZUM EINRICHTEN EINER ABSTRAHIERTEN KANALDARSTELLUNG FÜR EINE KOMMUNIKATION ZWISCHEN MINDESTENS ZWEI BEWEGLICHEN KOMMUNIKATIONSPARTNERN, VORRICHTUNG ZUM DURCHFÜHREN EINES VERFAHRENSSCHRITTES, FAHRZEUG UND COMPUTERPROGRAMM
PROCÉDÉ D'ÉTABLISSEMENT D'UNE REPRÉSENTATION DE CANAL ABSTRAIT POUR UNE COMMUNICATION ENTRE AU MOINS DEUX PARTENAIRES DE COMMUNICATION MOBILE, APPAREIL DE MISE EN OEUVRE D'UNE ÉTAPE DU PROCÉDÉ, VÉHICULE ET PROGRAMME INFORMATIQUE

(43) Date of publication of application: 11.03.2020
(73) Proprietor: VOLKSWAGEN AKTIENGESELLSCHAFT, 38440 Wolfsburg (DE); MAN Truck & Bus SE, 80995 München (DE)
(72) Inventor: Jornod, Guillaume, 10245 Berlin (DE); Alieiev, Roman, 39576 Stendal (DE)
(74) Representative: Rittner, Karsten

(56) References cited:
- EP-A1- 2 564 626
- WO-A1-2008/013878

## Description

The disclosure relates to a method for setting up an abstracted channel representation for a communication between at least two moving communication partners. The proposal also discloses a corresponding apparatus for performing a step of the method, a vehicle and a corresponding computer program.

The proposal concerns a problem in wireless communication where multiple radio access technologies are applied.

For the scenario of vehicles equipped with wireless communication modules that provide connectivity to public communication networks but also provide a direct communication capability for exchanging information among the road participants, wireless communication offers the opportunity to implement a wide range of applications. A lot of research concerns the fields of cooperative and autonomous driving. Direct communication between vehicles is often referred to be vehicle-to-vehicle communication V2V. Also possible is communication from and to a vehicle with infrastructure communication stations such as a road side unit RSU. Such type of communication is very often referred to be V2X communication (vehicle-to-everything).

Autonomous driving (sometimes referred to as automatic driving, automated driving or piloted driving) is the movement of vehicles, mobile robots and driverless transport systems which are largely autonomous. There are different degrees of autonomous driving. In this case, autonomous driving is also spoken at certain levels even if a driver is still present in the vehicle, who possibly only takes over the monitoring of the automatic driving operation. In Europe, the various transport ministries (in Germany, the Federal Institute for Road Systems (Bundesanstalt für Straßenwesen) was involved) worked together and defined different autonomous stages. A slightly different definition of levels is known from the Society of Automotive Engineers SAE for a pan-European cooperation on this matter.

Future cooperative driving applications are envisioned to significantly improve efficiency and comfort of automated driving. Increase in cooperation between vehicles pose specific requirements on communication system and the way messages are exchanged among cooperating vehicles.

Typical communication scenarios for V2V communication are road safety scenarios, traffic efficiency scenarios and infotainment scenarios. From the road safety scenarios the following examples are currently being deployed: "Cooperative Forward Collision Warning", "Pre-Crash-Detection / Warning", "Lane change warning/blind spot warning", "Emergency Electric Brake Light Warning", "Intersection Movement Assist", "Emergency Vehicle Approaching", "Road Works Warning" (non-exhaustive list). From the traffic efficiency scenarios the "High-Density Platooning" is mentioned. The high density platooning application could also be regarded to be an example of the road safety scenarios, because the cooperative driving of a plurality of vehicles in a convoy with small distance (< 10 m) is very critical in terms of the safety requirements.

Currently the following mobile communication technologies are applicable for bringing connectivity to a vehicle: 3GPP-based UMTS, HSPA, LTE, and the upcoming 5G standards.

For the V2V or V2X communication the following technologies are readily available. LTE-based cellular V2X with sidelink communication at the physical layer, also called PC5 sidelink communication, WLAN p communication (IEEE 802.11p), and Ultra Wide Band communication UWB.

Autonomous driving is on the rise. Though it has been demonstrated that autonomous vehicles can rely on their own sensors for environmental scanning, it is foreseen that they can greatly benefit from cooperation with surrounding vehicles, either in terms of control or in terms of perception. This cooperation is supported by V2V or in general V2X communication.

An emerging concept of modern communication systems is the surroundings awareness. Sensing and understanding its environment, a communication system can adapt its functioning to external conditions such as dynamic scatterers (e.g. other vehicles) or static scatterers (e.g. buildings).

The main limitation of such a system is that, due to their dynamics, vehicles have very limited channel estimation data. Moreover, this data becomes very soon obsolete. Vehicles could therefore benefit from historical and estimated channel information in order to better understand future channel conditions.

Another state of the art concept is the design of heterogeneous communication systems, which uses multiple radio access technologies (RAT) to achieve better performance. The performance of multi-RAT systems is highly depending on the QoS prediction on which combination and switching decisions are made.

Currently Internet of Things (IoT) and other connected services yield a very large number of devices communicating using different channels, technologies, frequencies etc. To have an appropriate connection, each communication process needs to have an estimate of the channel quality. Each of this radio access technologies, has its own process for determining channel characteristics which includes making measurements of the channel characteristics. As a result they have independent estimations of the quality of service and usually the QoS is not the same for each RAT since different frequencies, modulation techniques, etc. are used. Therefore, if we consider two pairs of communication partners placed at the same position, if they do not use the same RAT, they cannot benefit from respective channel measurements of each other.

In the advent of multi-RAT connectivity, this independence of measurement in terms of RAT also makes the decision-making in multi-RAT systems even more complex. For certain applications in autonomous or cooperative driving scenarios it is important to assess the overall QoS also for case when the multi-RAT technology is applied.

During system design of a communication technology various simulation techniques are applied. One of the used solutions for creating a channel representation which can be suitable for different RAT technologies is "ray tracing". The technology-dependent channel estimation is then deduced from this general channel representation to estimate the parameters of the instantaneous link. This method however has no equivalent in real-life. Indeed, each RAT has its own channel estimation and already from the fact that the propagation conditions differ from RAT to RAT, it is not for sure that a quality of service estimation for a given RAT could benefit from the other RAT measurements.

From EP 1 830 596 B1 a method and wireless user equipment for a position assisted network scanning is known. The proposal involves that a UE device modulates its scanning behaviour. A logic module in the UE device interrogates a database to determine which radio access technologies "RATs" have coverage in a geographic area location where the wireless UE device is located. This a geographic based cross-technology coverage database.

The logic module varies, in response to only the particular RAT being sensed in the geographic area location and to an alternate RAT being previously seen in the geographic area location, the frequency of network scanning process for the alternate RAT.

From US 2015/0327132 A1 a method and apparatus for providing wireless connection quality guidance is known. A user device determines a set of connection information at a current location of the device. The current connection information set includes one or more of current location information, current wireless channel information, current radio access technology information, and a current wireless channel quality metric. The device adds the current connection information set to a database of connection information that stores a plurality of sets of alternate connection information.

From US 2010/0015978 A1 a preferred system selection enhancement for multi-mode wireless systems is known. Systems and methodologies are described that facilitate improved multi-mode system selection in a wireless communication system. Different system databases corresponding to disparate groups of radio access technologies (RATs), such as a Public Land Mobile Network (PLMN) list and/or a Preferred Roaming List (PRL), are used.

From EP 2 564 626 A1 a neighborhood multimedia sharing controller is known, which includes a dynamic spectrum management entity configured to allocate multimedia packets to available unlicensed frequency bands for use by a respective radio access technology (RAT) selected from several RAT physical layers, based on quality of service (QoS) requirements of multimedia applications. A network interface of the neighborhood multimedia sharing controller enables peer-to-peer communication with at least one other neighborhood multimedia sharing controller to coordinate a cluster of ad hoc network nodes based on detected common multimedia stream patterns.

From WO 2008/013878 A1 a communication device configured to facilitate a mesh network is known. The communication device comprises a media independent mesh function configured to exchange media independent mesh information between peer mesh entities. The communication device has multiple physical network links that communicate with the media independent mesh function and includes a media dependent mesh function and a plurality of upper layer functions. The media independent mesh function is configured to communicate with, monitor and configure multiple radio access technologies in a single mesh network.

The above mentioned prior art solutions have the drawback that in the databases from the prior art solutions only RAT-specific channel characteristic information are collected. Also some of them include information on a system level, i.e. information from higher OSI layers starting at the transport layer. In this form the collected information from one RAT technology cannot be used for a channel quality determination for other RAT technologies.

What is needed is a sufficiently abstracted representation of channel parameters between two communicating partners at a given position and time which can be used to derive at least some channel properties for an arbitrary RAT.

These and other objects are solved with a method for setting up an abstracted channel representation for a communication between at least two moving communication partners according to claim 1, a corresponding apparatus for performing steps of the method according to claim 13, a vehicle according to claim 14, and a corresponding computer program according to claim 15.

The dependent claims contain advantageous developments and improvements to the method, device, and computer program according to the disclosure.

The proposed solution stems from the idea that it would be good to benefit from the knowledge of the joint behaviour of the different RATs in a specific environment for a channel estimation at each RAT independently. For this purpose, also the relationship between parameters of the different RATs and the parameters of the channel is utilized to create an abstracted channel representation. For this purpose a database is set up, which records different RAT-specific characteristics measurements.

This database can be centralized in which case the learning benefit from a large quantity of measurement and the filter are made available to all communicative entities and updated regularly with the disadvantage that there is a need to trust the providing entity. This database can be distributed, in which case communicative entities share their RAT-specific characteristics measurements and make their own learning from the data.

In one embodiment, the proposal concerns a method for setting up an abstracted channel representation for a communication between at least two moving communication partners, which are equipped with a number of different radio access technologies - RAT, and which may apply a multi-RAT communication technology. The method comprises the steps of measuring a plurality of RAT-specific characteristics for the given radio access technologies of the communication partners. The method includes steps of recording the plurality of RAT-specific characteristics measurements for the given radio access technologies in a database, and converting the RAT-specific characteristics measurements into an abstracted channel representation comprising abstracted channel characteristics independent from the RAT technologies for the communication between the at least two communication partners. The abstracted channel representation is established such that one or more RAT-specific channel properties of a RAT of interest can be concluded from the abstracted channel characteristics.

Typical examples of RAT-specific characteristics measurements include one or more of the information estimated channel coefficients, sampling rate for taking RAT-specific characteristics samples, the bandwidth of the communication over said RAT, and the throughput of the communication over said RAT, the latency of the communication over said RAT, the data rate of the communication over said RAT.

In a further embodiment, the method according to the proposal comprises the step of recording a plurality of RAT-specific characteristics measurements for a given radio access technology in the database includes a step of recording of metadata for the measurements in the database. This helps for evaluating the RAT-specific characteristics measurements later on.

Preferably, such said metadata includes information about the properties of the radio access technologies and/or some limitations of the radio access terminals.

Here, in one embodiment, the properties of the radio access technologies corresponding to the multi-RAT technology include one or more of the information items frequency, modulation scheme, number of resource blocks assigned and number of antennas used for the communication over said RAT.

In a further enhanced embodiment, said database is also populated with information about the perceived environment of at least one of the communication partners for the moment the RAT-specific characteristics have been measured. This information is important for predicting the quality of service for future times. The quality of channel estimation and hence of the offered service is strongly dependent on interferences due to effects from the environment such as static or dynamic scattering. Static scattering may happen from buildings in the environment and dynamic scattering mostly from moving vehicles in the environment.

For the step of establishing an abstracted channel representation, it is advantageous that it includes one or more of the steps of filtering the RAT-specific characteristics measurements, refining the characteristics measurements by means of an interpolation technique, and combining the RAT-specific characteristics measurements. This is a form of pre-processing which helps to increase the accuracy of the RAT-specific characteristics measurement set.

In a preferred embodiment, the filtering step includes one or more of the filtering techniques Kalman filtering, particle filtering, and Bayesian filtering. These are digital filtering techniques that are well adapted for the use in computing devices.

Likewise, it is very advantageous that said step of combining the RAT-specific characteristics measurements includes a step of applying a data fusion technique. The data fusion technique is well developed and helps to improve the accuracy of the measurement data set.

Moreover, it is advantageous that the step of establishing an abstracted channel representation includes a step of calculating one or more of the abstracted channel characteristics of a physical layer, or data link layer or network layer of the communication over said communication channel.

Preferred examples of said RAT-specific characteristics of a physical layer or data link layer or network layer of the communication over said communication channel include one or more of the characteristics channel coefficients, an applicable bandwidth range, an applicable sampling rate, and an applicable receiver sensitivity range.

In a further embodiment, said overall channel characteristics are recorded in a table together with the information about the environment and information about the accuracy of the recorded channel characteristics. Such table could also be recorded in the same database or a separate database.

In another embodiment, the proposal comprises a step of deriving a RAT-specific characteristic based on the abstracted channel representation. This step corresponds to the utilization of the abstracted channel representation for concluding from the information in said table how a RAT-specific characteristic will be with a better reliability. This can be utilized for a better QoS prediction for the different RATs as well as for an overall QoS prediction for all RATs in combination.

For a corresponding apparatus for performing steps in the method according to the proposal, it is advantageous if the apparatus comprises a processing device which is adapted to perform the steps of establishing an abstracted channel representation for the communication between the at least two communication partners. Typically, this processing device is a microcontroller, microprocessor or microcomputer. The apparatus could be part of a backend server or part of a vehicle.

For safety critical cooperative or autonomous driving applications, it is advantageous to equip a vehicle with such apparatus.

For a corresponding computer program, it is advantageous that it comprises program code, which when run in a processing device performs the steps of establishing an abstracted channel representation for the communication between the at least two communication partners in the method according to the proposal.

Exemplary embodiments of the present disclosure are shown in the drawing and are explained in greater detail in the following description.

In the drawings:
- Fig. 1: illustrates the principle architecture of a V2V and V2X communication system;
- Fig. 2: shows a high density platooning scenario in which a plurality of vehicles cooperatively drive in a convoy;
- Fig. 3: shows a block diagram of a vehicle's electronics system;
- Fig. 4: shows the structure of a database for collecting a plurality of channel measurements.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided by the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

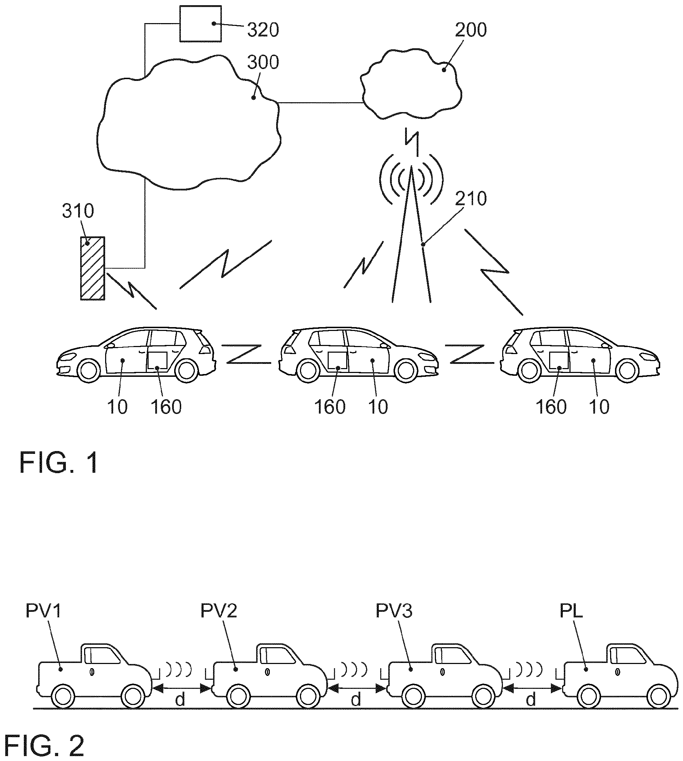

Fig. 1 shows the system architecture for the proposal. Reference number 10 denotes a user device. The depicted user device is exemplified as a vehicle and more in particular it is a car. In other examples it may be differently exemplified, e.g. a smart phone, a smart watch, a tablet computer, notebook or laptop computer or the like. Shown is a passenger car. If exemplified with a vehicle, it may be any type of a vehicle. Examples of other types of vehicles are: buses, motorcycles, commercial vehicles, in particular trucks, agricultural machinery, construction machinery, rail vehicles, etc. The use of the invention would be generally in land vehicles, rail vehicles, watercrafts and aircrafts possible. The vehicle 10 is equipped with an on-board connectivity module 160 including corresponding antenna such that the vehicle 10 can participate in any form of a mobile communication service. Fig. 1 illustrates that vehicle 10 may transmit and receive signals to and from a base station 210 of a mobile communication service provider.

Such base station 210 may be an eNodeB base station of an LTE (Long Term Evolution) mobile communication service provider. The base station 210 and the corresponding equipment is part of a mobile communication network with a plurality of network cells where each cell is served by one base station 210.

The base station 210 in Fig. 1 is positioned close to a main road on which the vehicle 10 is driving. Of course, other vehicles may also drive on the road. In the terminology of LTE, a mobile terminal corresponds to a user equipment UE, which allows a user to access network services, connecting to the UTRAN or Evolved-UTRAN via the radio interface. Typically, such user equipment corresponds to a smart phone. Of course, mobile terminals are also used in the vehicles 10. The cars 10 are equipped with said on-board connectivity module OCU 160. This OCU corresponds to an LTE or any other communication module with which the vehicle 10 can receive mobile data in downstream direction and can send such data in upstream or in direct device-to-device direction. This OCU 160 is further equipped with multi RAT technology corresponding to radio access technology. Multi-RAT networks combine several radio access technologies to deliver the service to users (e.g. UMTS, LTE, Wi-Fi). For the application in vehicles and for the implementation of V2V and V2X communication capability primarily the following technologies will be combined: LTE Cellular Vehicle-to-Everything (3GPP Releases 14 and above) which is based on the PC5 interface (also known as sidelink communication at the physical layer) corresponds to the 4G and future 5G mobile communication technology, WLAN p, corresponds to the IEEE 802.11p communication technology, Bluetooth communication, ZigBee communication and UWB communication which corresponds to an ultra-wide band communication technology. While UWB, Bluetooth and ZigBee are not specially designed for V2V and V2X communication, they are mentioned here since they have the potential with corresponding adaptation that they could also be used for this purpose. UWB communication technology can be utilized in the cooperative driving application "high density platooning". More detailed information about the use of this communication technique for V2V communication is provided in the article "A Vehicular Ultra-Wideband Channel Model for Future Wireless Intra-Vehicle Communications (IVC) Systems" from Weidong Xiang.

More detailed information concerning the multi-RAT technology which will be applied in the 5G mobile communication system is provided in the paper "5G Multi-RAT integration evaluations using a common PDCP layer" from C. Kilnic, M. Ericson, P. Rugeland, I. Da Silva, A. Zaidi, O. Aydin, V. Venkatasubramanian, M. C. Filippou, M. Mezzavilla, N. Kuruvatti and J. F. Monserrat.

In terms of the LTE mobile communication system, the Evolved UMTS Terrestrial Radio Acess Network E-UTRAN of LTE consists of a plurality of eNodeBs, providing the E-UTRA user plane (PDCP/RLC/MAC/PHY) and control plane (RRC) protocol terminations towards the UE. The eNodeBs are interconnected with each other by means of the so-called X2 interface. The eNodeBs are also connected by means of the so-called S1 interface to the EPC (Evolved Packet Core) 200, more specifically to the MME (Mobility Management Entity) by means of the S1-MME and to the Serving Gateway (S-GW) by means of the S1-U interface.

From this general architecture Fig. 1 shows that eNodeB 210 is connected to the EPC 200 via the S1 interface and that EPC 200 is connected to the Internet 300. The backend server 320 to which the vehicles 10 send messages to and receive messages from is also connected to the Internet 300. In the field of cooperative and autonomous driving the backend server 320 typically is located in a traffic control center. The S1 interface may be reduced to practice with wireless communication technology such as with the help of microwave radio communication by means of directional antennas or wired communication technology based on fiber cables. Finally, an infrastructure network component is also shown. This may be exemplified by a road-side unit RSU 310. For the ease of implementation, it is considered that all components have assigned an Internet address, typically in the form of an IPv6 address, such that the packets transporting messages between the components can be routed correspondingly.

The various interfaces of the LTE network architecture are standardized. It is particularly referred to the various LTE specifications, which are publicly available for the sake of sufficiently disclosing further implementation details.

As already mentioned in the consistory clause, one prominent example of a cooperative driving maneuver is called "platooning". Fig. 2 shows what it is. Platooning refers to the intelligent convoy driving as an application, which is also known as "high density platooning". The distances d between the vehicles of the convoy, e.g. trucks are adapted to the traffic situation and controlled. The aim is to reduce the distance d between the convoy vehicles as much as possible to reduce energy consumption. For this purpose, messages must be constantly exchanged between the convoy vehicles. In one form of realization of a platoon, there is one vehicle which is coordinating the cooperative driving maneuver. It is the vehicle at the front of the platoon, which is called the platoon leader. In Fig. 2, the platoon leader is marked with reference sign PL. The other vehicles in the platoon are marked with reference signs PV1, PV2, PV3.

When one vehicle is coordinating the cooperative driving maneuver, this vehicle is named platoon leader. In Fig. 2, the platoon leader is marked with reference sign PL. This vehicle can be in front but not necessarily. When there is no platoon leader, the platoon is said to be decentralized or distributed. In such systems, one vehicle can take the role of communication manager.

Typically, in high density platooning trucks of appropriate length, band together to cover a distance to save energy and protect the environment. All vehicles are equipped with a GNSS receiver corresponding to Global Navigation Satellite System. Examples of a GNSS receiver are a GPS-receiver corresponding to Global Positioning System, Galilei-, GLONASS- and Beidou-receiver. All vehicles of the platoon are equipped with said on-board connectivity unit 160 including direct vehicle communication capability. Furthermore, it is mentioned that the vehicles may also be equipped with UWB transceivers (not shown) corresponding to ultra-wide-band transceivers. The vehicles may each be equipped with 2 UWB transceivers, one at the front of the vehicle and a second at the rear of the vehicle. The UWB transceivers allow the measurement of the inter vehicle distance with greater accuracy. The vehicles are also equipped with a platoon coordination unit. However, this feature is only activated on the platoon leader vehicle PL or in a platoon leading function, if the leading role is not directly mapped with the vehicle.

The vehicles are also equipped with means for surroundings observation. The sensor system, which is used to capture the environmental objects is based on different measuring methods depending on the application. Widespread technologies are among others RADAR corresponding to Radio Detection and Ranging, LIDAR corresponding to Light detection and ranging, cameras 2D and 3D and ultrasonic sensors.

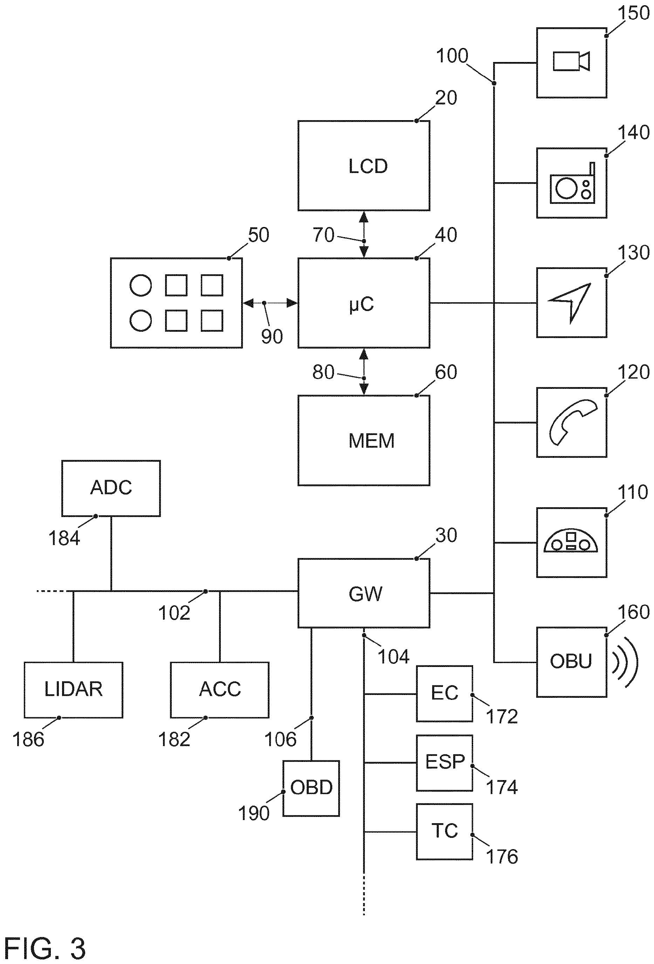

Fig. 3 shows schematically a block diagram of the vehicle's 10 board electronics system. Part of the board electronics system is an infotainment system which comprises: the touch-sensitive display unit 20, a computing device 40, an input unit 50, and a memory 60. The display unit 20 includes both a display area for displaying variable graphical information and an operator interface (touch-sensitive layer) arranged above the display area) for inputting commands by a user.

The memory device 60 is connected to the computing device 40 via a further data line 80. In the memory 60, a pictogram directory and / or symbol directory is deposited with the pictograms and / or symbols for possible overlays of additional information.

The other parts of the infotainment system such as camera 150, radio 140, navigation device 130, telephone 120 and instrument cluster 110 are connected via the data bus 100 with the computing device 40. As data bus 100 the high-speed variant of the CAN bus according to ISO standard 11898-2 may be taken into consideration. Alternatively, for example, the use of an Ethernet-based bus system such as IEEE 802.03cg is another example. Bus systems in which the data transmission via optical fibers happens are also usable. Examples are the MOST Bus (Media Oriented System Transport) or the D2B Bus (Domestic Digital Bus). For inbound and outbound wireless communication, the vehicle 10 is equipped with a communication module 160. This communication module 160 is often referred to as an on-board connectivity module OCU as mentioned above. It can be used for mobile communication, e.g. mobile communication according to the LTE standard, according to Long Term Evolution. It is also equipped with multi-RAT technology as mentioned above.

Reference numeral 172 denotes an engine control unit. The reference numeral 174 corresponds to an ESC control unit corresponding to electronic stability control and the reference numeral 176 denotes a transmission control unit. The networking of such control units, all of which are allocated to the category of the drive train, typically occurs with the CAN bus system (controller area network) 104. Since various sensors are installed in the motor vehicle and these are no longer only connected to individual control units, such sensor data are also distributed via the bus system 104 to the individual control devices.

However, the modern motor vehicle can also have further components such as further surroundings scanning sensors like a LIDAR (Light Detection and Ranging) sensor 186 or RADAR (Radio Detection and Ranging) sensor and more video cameras, e.g. as a front camera, rear camera or side camera. Such sensors are used more and more in vehicles for surroundings observation. Further control devices, such as an automatic driving control unit ADC 184 and an adaptive cruise control unit ACC 182, etc., may be provided in the motor vehicle. There may be other systems in the vehicle, too such as the UWB transceivers for inter vehicle distance measurement. The UWB transceivers may typically be used for a short distance observation, e.g. 3 to 10 m. The RADAR and LIDAR sensors could be used for scanning a range up to 250 m or 150 m and the cameras cover a range from 30 to 120 m. The components 182 to 186 are connected to another communication bus 102. The Ethernet-Bus may be a choice for this communication bus 102 due to its higher bandwidth for data transport. One Ethernet-Bus adapted to the special needs of car communication is standardized in the IEEE 802.1Q specification. Moreover, a lot of information for surroundings observation may be received via V2V communication from other road participants. Particularly for those road participants not being in line of sight LOS to the observing vehicle it is very advantageous to receive the information about their position and motion via V2V communication.

Reference number 190 denotes an on-board diagnosis interface.

For the purpose of transmitting the vehicle-relevant sensor data via the communication interface 160 to another vehicle or to a central computer 320, the gateway 30 is provided. This is connected to the different bus systems 100, 102, 104 and 106. The gateway 30 is adapted to convert the data it receives via the one bus the transmission format of the other bus so that it can be distributed in the packets specified there. For the forwarding of this data to the outside, i.e. to another motor vehicle or to central computer 320, the on-board unit 160 is equipped with the communication interface to receive these data packets and, in turn, to convert them into the transmission format of the correspondingly used mobile radio standard. The gateway 30 takes all the necessary format conversions if data are to be exchanged between the different bus systems if required.

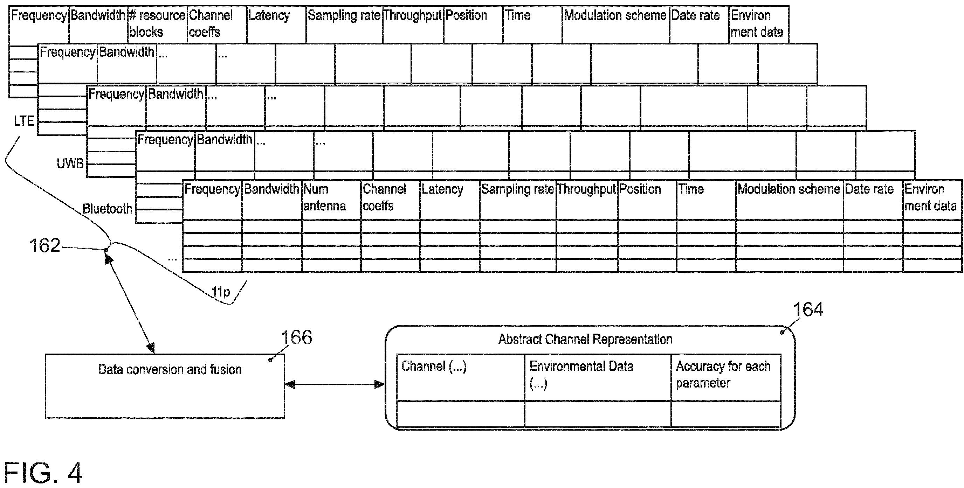

Fig. 4 now shows the structure of a database 162 that is set up for recording the history of RAT-specific characteristics measurements. In one embodiment, this database 162 is present in each communication partner. In another embodiment, this database 162 is provided in only a subset of all communication partners. In a still further embodiment, this database 162 is located in a centralized fashion, for example in a backend server 320.

As indicated in Fig. 4, the database 162 is structured in the form that it contains tables, one each for the given multi-RAT technologies LTE-based Cellular V2X, UWB, Bluetooth and WLAN p, etc. Such tables contain fields for various channel estimation and technology relevant characteristics such as frequency, bandwidth, number of resource blocks, channel coefficients, sampling rate, achieved throughput, position, time, modulation scheme used, data rate, number of antennas used, etc.

The channel coefficients are most important in this listing. Existing RATs usually estimate such channel coefficients only for their own specific RAT configuration. Since the estimated channel coefficients depend on many parameters, such as position, sampling rate, used bandwidth it is usually not possible to directly reuse them for other RATs.

Therefore, the step of establishing an abstracted channel representation for the communication combines the information from the different RAT-specific characteristics in a way to describe the channel in a manner as general as possible. For this reason the information about the surrounding environment and the use of ray-tracing helps here to have a better understanding of the generalized channel behavior. What results is an abstracted channel representation from which some arbitrary RAT-specific channel properties of the RAT of interest can be concluded.

Also added to the database 162 is data about the perceived environment for the RAT-specific characteristics measurement event being characterized by position and time. This could be in the form of a list of objects recognized in in the environment. On a road, these are typically other road participants (vehicle in different categories), traffic signs, traffic lights, buildings at the side of the road, etc. The sampling rate determines how and with which accuracy the RAT-specific characteristics measurements are obtained. Typical rates of RAT-specific characteristics measurements are in the range of number of measurements per second or millisecond and typical sampling rates are in number of samples per millisecond or microsecond. The amount of measurements that will be recorded in the tables could be fixed or flexible depending of the properties of the obtained measurements.

Each table contains RAT-specific characteristics. For an application in the communication partner there is still the problem how to estimate the overall performance of the V2V communication with a communication partner.

According to the proposal this multi-RAT characteristic database 162 will be transformed into an abstracted and preferably RAT independent overall characteristic representation. This overall channel characteristic representation could be in the form of a table, see in Fig. 4 reference number 164. It is proposed that the table 164 comprises fields for certain channel characteristics from the lower layers in the OSI reference model of communication systems namely in particular from the physical layer and optionally from the data link layer plus optionally from upper layers if such parameters played a role in how the channel was estimated. Examples of such characteristics are overall data rate, overall throughput, overall latency, position and time.

To convert characteristics from the RAT technologies into abstracted characteristics independent from the RAT technology, the following algorithms 166 may be applied. First of all, data fusion technique is mentioned. This may be used for merging the plurality of measurement results from the different RAT technologies and for improving accuracy of the data. E.g. bandwidth measurements of corresponding position and time values could be combined together. The same could happen for other data items like number of resource blocks, latency, throughput and data rate.

Another type of algorithm is a filtering algorithm which preferably runs before the data fusion technique is applied. Examples of filtering techniques which may be applied are Kalman filtering algorithms, Bayesian filtering algorithms, particle filtering algorithms and more.

Moreover, interpolation algorithms are mentioned which may also be applied before the data fusion algorithm is executed. The typical situation when interpolation algorithms are appropriate are instants when the sampling rate or the rate for measuring RAT-specific characteristics differ subjectively for the different RAT technologies. With these techniques it is possible to generate intermediate measurement values from the existing sample values. Important interpolation techniques which may be used are linear interpolation, cubic spline interpolation and kriging interpolation.

All the different algorithms 166 will be executed on a computing device (microcontroller, microprocessor or microcomputer). This may either be a computing device in the on-board connectivity unit 160 or the computing device 40 if the database 162 is stored locally in the vehicle 10 or it may be the backend server 320 if the database is centrally stored at the backend server 320. This last mentioned embodiment requires that the vehicles 10 feed forward their channel characteristic measurement results to the backend server. This could be done with the help of V2X communication or normal mobile communication. It also requires that either the table 164 with the abstracted channel representation is transferred back to the communication partners again with V2X communication or normal mobile communication or the individual communication partner has the conversion algorithms available and does the conversion locally. If the database is centralized, it has the advantage that a large quantity of measurement results is available since more communication partners report their RAT-specific characteristics measurement results.

Table 164 further includes a field for the environment data. Such environment data for the different RAT technologies may also be subject of the different conversion algorithms mentioned. The environment data is important since static and dynamic scattering could severely affect the quality of service. If the dynamics of the objects in the environment is recorded, meaning that the velocity and movement direction is recorded for the moving objects, the corresponding RAT-specific characteristics could be predicted for future times.

Further in the table 164, the accuracy of the characteristics is recorded. In one embodiment, the accuracy would be derived from the comparison between the representation obtained from the measurement results and a ray-tracing based model using the recognized objects listed in the set of environment data. The accuracy is constantly obtained by comparing measured with calculated/predicted values. If such information about the accuracy is readily available in the database, then it can be directly used to understand how good the conversion could be made.

This way the proposed solution offers to benefit from the knowledge of the joint behaviour of the different RATs in a specific environment as well as the relationship between its parameters and the parameters of the channel to create an abstracted channel representation. Using its knowledge of the environment, it distinguishes the short-term (due to dynamic scatterers for instances) and long-term properties of the channel.

In one embodiment the table 164 is also recorded in the database 162.

One example of an application, which could benefit from the database 162 and the table 164 with an abstracted channel representation, is the high-density platooning application. Such high density platooning application is safety critical. For controlling the inter vehicle distance d, the platoon leader PL and other platoon members PV1 to PV4 to would need to exchange a plurality of messages with V2V communication. The platoon leader needs to predict the quality of service for a certain period of time, e.g. the next 200 ms. If the QoS prediction leads to a good overall performance of the V2V communication, the platoon leader PL controls the platoon members to reduce the inter vehicle distance d for saving more energy. If the QoS prediction leads to a bad overall performance of the V2V communication, the platoon leader PL controls the platoon members PV1 to PV4 to increase the distance d between the platoon members.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to and executed by a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

The disclosure is not restricted to the exemplary embodiments described here. There is scope for many different adaptations and developments, which are also considered to belong to the disclosure.

### Reference Sign List

- 10: Vehicle
- 20: Touch Screen
- 30: Gateway
- 40: Computing Device
- 50: Operation Element Unit
- 60: Memory Unit
- 70: Data Line to Display Unit
- 80: Data Line to Memory Unit
- 90: Data Line to Operation Element Unit
- 100: Data Bus
- 110: Multifunction Display
- 120: Telephone
- 130: Navigation System
- 140: Radio
- 150: Camera
- 160: On-Board Connectivity Unit
- 162: Database
- 164: Table
- 166: Conversion Algorithms
- 200: Evolved Packet Core
- 210: Base Station
- 300: Internet
- 310: Road Side Unit
- 320: Backend Server
- PL: Platoon Leader
- PV1 - PV4: Platoon Members

## Claims

1. A method for setting up an abstracted channel representation for a communication over a communication channel between at least two moving communication partners (PL, PV1 - PV4), which are equipped with a number of different radio access technologies - RAT, and which apply a multi-RAT communication technology, the method comprising:
- measuring a plurality of RAT-specific characteristics for the given radio access technologies of the communication partners (PL, PV1 - PV4); and
- recording the plurality of RAT-specific characteristics for the given radio access technologies in a database (162);
**characterized in that** the method further comprises:
- establishing an abstracted channel representation comprising abstracted channel characteristics independent from the RAT technologies for the communication between the at least two communication partners (PL, PV1 - PV4) based on the RAT-specific characteristics recorded in the database (162), wherein the abstracted channel representation is established such that one or more RAT-specific channel properties of a RAT of interest can be concluded from the abstracted channel characteristics.

2. The method according to claim 1, wherein said RAT-specific characteristics measurements include one or more of the characteristics estimated channel coefficients, sampling rate for taking RAT-specific characteristics samples, the bandwidth of the communication over said RAT, and the throughput of the communication over said RAT, the latency of the communication over said RAT, and the data rate of the communication over said RAT.

3. The method according to claim 1 or 2, wherein said step of recording a plurality of RAT-specific characteristics measurements for a given radio access technology in the database (162) includes a step of recording metadata information for the measurements in the database (162).

4. The method according to claim 3, wherein said metadata information includes information about the properties of the radio access technologies corresponding to the multi-RAT technology and/or some limitations of the radio access technologies corresponding to the multi-RAT technology.

5. The method according to claim 4, wherein the properties of the radio access technologies corresponding to the multi-RAT technology include one or more of the information items frequency, modulation scheme, number of assigned resource blocks and number of antennas for the communication over said RAT.

6. The method according to any one of the previous claims, wherein said database (162) is further populated with information about a perceived environment of at least one of the communication partners (PL, PV1 - PV4) for the moment the RAT-specific characteristics have been measured.

7. The method according to any one of the previous claims, wherein the step of establishing an abstracted channel representation includes one or more of the steps of filtering the RAT-specific characteristics measurements, refining the RAT-specific characteristics by means of an interpolation technique, and combining the RAT-specific characteristics measurements.

8. The method according to claim 7, wherein said step of combining the RAT-specific characteristics measurements includes a step of applying a data fusion technique.

9. The method according to any one of the previous claims, wherein said step of establishing an abstracted channel representation includes calculating one or more of the abstracted channel characteristics of a physical layer or data link layer of the communication over said communication channel.

10. The method according to claim 9, wherein said abstracted channel representation includes said calculated abstracted channel characteristics on a physical layer, or data link layer of the communication over said communication channel including one or more of the abstracted channel characteristics an applicable bandwidth range, an applicable sampling rate, and an applicable receiver sensitivity range.

11. The method according to claim 9 or 10, wherein said abstracted channel representation is recorded in a table (164) together with information about an environment and information about an accuracy of the recorded channel characteristics.

12. The method according to any one of the previous claims, further comprising a step of deriving a RAT-specific characteristic based on the abstracted channel representation.

13. An apparatus for performing steps of the method according to any one of the previous claims, wherein the apparatus comprises a processing device which is adapted to perform the step of establishing the abstracted channel representation for the communication between the at least two communication partners (PL, PV1 - PV4) based on the RAT-specific characteristics in the method according to any one of the previous claims.

14. Vehicle comprising an apparatus according to claim 13.

15. Computer program comprising program code, which, when run in a processing device, performs the steps of establishing the abstracted channel representation for the communication between the at least two communication partners (PL, PV1 - PV4) based on the RAT-specific characteristics of the method according to any one of claims 1-12.

## Patentansprüche

1. Verfahren zum Aufbauen einer abstrahierten Kanaldarstellung für eine Kommunikation über einen Kommunikationskanal zwischen mindestens zwei sich bewegenden Kommunikationspartnern (PL, PV1-PV4), die mit einer Anzahl unterschiedlicher Funkzugriffstechnologien - RAT - ausgestattet sind und die eine Multi-RAT-Kommunikationstechnologie anwenden, wobei das Verfahren umfasst:
Messen mehrerer RAT-spezifischer Kenngrößen für die gegebenen Funkzugriffstechnologien der Kommunikationspartner (PL, PV1-PV4); und
Aufzeichnen der mehreren RAT-spezifischen Kenngrößen für die gegebenen Funkzugriffstechnologien in einer Datenbank (162);
**dadurch gekennzeichnet, dass** das Verfahren ferner umfasst:
Aufbauen einer abstrahierten Kanaldarstellung, die abstrahierte Kanalkenngrößen unabhängig von den RAT-Technologien für die Kommunikation zwischen den mindestens zwei Kommunikationspartnern (PL, PV1-PV4) umfasst, auf der Grundlage der RAT-spezifischen Kenngrößen, die in der Datenbank (162) aufgezeichnet sind,
wobei die abstrahierte Kanaldarstellung in der Weise aufgebaut wird, dass aus den abstrahierten Kanalkenngrößen eine oder mehrere RAT-spezifische Kanaleigenschaften einer interessierenden RAT gefolgert werden können.

2. Verfahren nach Anspruch 1, wobei die Messungen RAT-spezifischer Kenngrößen die Kenngrößen geschätzte Kanalkoeffizienten und/oder Abtastrate für das Nehmen der Abtastwerte RAT-spezifischer Kenngrößen und/oder die Bandbreite der Kommunikation über die RAT und/oder den Durchsatz der Kommunikation über die RAT und/oder die Latenzzeit der Kommunikation über die RAT und/oder die Datenrate der Kommunikation über die RAT enthalten.

3. Verfahren nach Anspruch 1 oder 2, wobei der Schritt des Aufzeichnens mehrerer Messungen RAT-spezifischer Kenngrößen für eine gegebene Funkzugriffstechnologie in der Datenbank (162) einen Schritt des Aufzeichnens von Metadateninformationen für die Messungen in der Datenbank (162) enthält.

4. Verfahren nach Anspruch 3, wobei die Metadateninformationen Informationen über die Eigenschaften der Funkzugriffstechnologien, die der Multi-RAT-Technologie entsprechen, und/oder über einige Beschränkungen der Funkzugriffstechnologien, die der Multi-RAT-Technologie entsprechen, enthalten.

5. Verfahren nach Anspruch 4, wobei die Eigenschaften der Funkzugriffstechnologien, die der Multi-RAT-Technologie entsprechen, die Informationseinheiten Frequenz und/oder Modulationsschema und/oder Anzahl zugewiesener Ressourcenblöcke und/oder Anzahl der Antennen für die Kommunikation über die RAT enthalten.

6. Verfahren nach einem der vorhergehenden Ansprüche, wobei die Datenbank (162) ferner mit Informationen über eine wahrgenommene Umgebung mindestens eines der Kommunikationspartner (PL, PV1-PV4) für den Moment, in dem die RAT-spezifischen Kenngrößen gemessen worden sind, belegt wird.

7. Verfahren nach einem der vorhergehenden Ansprüche, wobei der Schritt des Aufbauens einer abstrahierten Kanaldarstellung die Schritte des Filterns der Messungen RAT-spezifischer Kenngrößen und/oder des Verfeinerns der RAT-spezifischen Kenngrößen mittels einer Interpolationstechnik und/oder des Kombinierens der Messungen RAT-spezifischer Kenngrößen enthält.

8. Verfahren nach Anspruch 7, wobei der Schritt des Kombinierens der Messungen RAT-spezifischer Kenngrößen einen Schritt des Anwendens einer Datenfusionstechnik enthält.

9. Verfahren nach einem der vorhergehenden Ansprüche, wobei der Schritt des Aufbauens einer abstrahierten Kanaldarstellung das Berechnen der abstrahierten Kanalkenngrößen einer Bitübertragungsschicht und/oder einer Sicherungsschicht der Kommunikation über den Kommunikationskanal enthält.

10. Verfahren nach Anspruch 9, wobei die abstrahierte Kanaldarstellung die berechneten abstrahierten Kanalkenngrößen über eine Bitübertragungsschicht oder Sicherungsschicht der Kommunikation über den Kommunikationskanal einschließlich der abstrahierten Kanalkenngrößen einer anwendbaren Bandbreite und/oder einer anwendbaren Abtastrate und/oder eines anwendbaren Empfängerempfindlichkeitsbereichs enthält.

11. Verfahren nach Anspruch 9 oder 10, wobei die abstrahierte Kanaldarstellung zusammen mit Informationen über eine Umgebung und Informationen über eine Genauigkeit der aufgezeichneten Kanalkenngrößen in einer Tabelle (164) aufgezeichnet wird.

12. Verfahren nach einem der vorhergehenden Ansprüche, das ferner einen Schritt des Ableitens einer RAT-spezifischen Kenngröße auf der Grundlage der abstrahierten Kanaldarstellung umfasst.

13. Vorrichtung zum Ausführen von Schritten des Verfahrens nach einem der vorhergehenden Ansprüche, wobei die Vorrichtung eine Verarbeitungseinrichtung umfasst, die dafür ausgelegt ist, den Schritt des Aufbauens der abstrahierten Kanaldarstellung für die Kommunikation zwischen den mindestens zwei Kommunikationspartnern (PL, PV1-PV4) auf der Grundlage der RAT-spezifischen Kenngrößen in dem Verfahren nach einem der vorhergehenden Ansprüche auszuführen.

14. Fahrzeug, das eine Vorrichtung nach Anspruch 13 umfasst.

15. Computerprogramm, das Programmcode umfasst, der, wenn er in einer Verarbeitungseinrichtung ausgeführt wird, die Schritte des Aufbauens der abstrahierten Kanaldarstellung für die Kommunikation zwischen den mindestens zwei Kommunikationspartnern (PL, PV1-PV4) auf der Grundlage der RAT-spezifischen Kenngrößen des Verfahrens nach einem der Ansprüche 1 12 ausführt.

## Revendications

1. Procédé d'établissement d'une représentation abstraite du canal pour une communication sur un canal de communication entre au moins deux partenaires de communication mobiles (PL, PV1 - PV4), équipés d'un certain nombre de technologies d'accès radio (RAT) différentes et appliquant une technologie de communication multi-RAT, le procédé comprenant:
- la mesure d'une pluralité de caractéristiques spécifiques à la technologie RAT pour les technologies d'accès radio données des partenaires de communication (PL, PV1 - PV4); et
- l'enregistrement de la pluralité de caractéristiques spécifiques à la technologie RAT pour les technologies d'accès radio données dans une base de données (162);
**caractérisé en ce que** le procédé comprend en outre:
- l'établissement d'une représentation abstraite du canal, comprenant des caractéristiques abstraites du canal indépendantes des technologies RAT pour la communication entre les au moins deux partenaires de communication (PL, PV1 - PV4) sur la base des caractéristiques spécifiques à la technologie RAT, enregistrées dans la base de données (162), la représentation abstraite du canal étant établie de telle sorte qu'une ou plusieurs propriétés du canal spécifiques à la technologie RAT d'une technologie RAT intéressante puissent être conclues à partir des caractéristiques abstraites du canal.

2. Procédé selon la revendication 1, dans lequel lesdites mesures de caractéristiques spécifiques à la technologie RAT comprennent une ou plusieurs des caractéristiques suivantes: coefficients de canal estimés, taux d'échantillonnage pour la prise d'échantillons de caractéristiques spécifiques à la technologie RAT, largeur de bande de la communication sur ladite technologie RAT, débit de la communication sur ladite technologie RAT, latence de la communication sur ladite technologie RAT et débit de données de la communication sur ladite technologie RAT.

3. Procédé selon la revendication 1 ou 2, dans lequel ladite étape d'enregistrement d'une pluralité de mesures de caractéristiques spécifiques à la technologie RAT pour une technologie d'accès radio donnée dans la base de données (162) comprend une étape d'enregistrement d'information de métadonnées relatives aux mesures dans la base de données (162).

4. Procédé selon la revendication 3, dans lequel ladite information de métadonnées comprend des informations sur les propriétés des technologies d'accès radio correspondant à la technologie multi-RAT et/ou certaines limitations des technologies d'accès radio correspondant à la technologie multi-RAT.

5. Procédé selon la revendication 4, dans lequel les propriétés des technologies d'accès radio correspondant à la technologie multi-RAT comprennent un ou plusieurs des éléments d'information suivants: fréquence, schéma de modulation, nombre de blocs de ressources assignés et nombre d'antennes pour la communication sur ladite technologie RAT.

6. Procédé selon l'une des revendications précédentes, dans lequel ladite base de données (162) est en outre alimentée par des informations sur un environnement perçu d'au moins un des partenaires de communication (PL, PV1 - PV4) au moment où les caractéristiques spécifiques à la technologie RAT ont été mesurées.

7. Procédé selon l'une des revendications précédentes, dans lequel l'étape d'établissement d'une représentation abstraite du canal comprend une ou plusieurs des étapes suivantes: filtrage des mesures des caractéristiques spécifiques à la technologie RAT, affinage des caractéristiques spécifiques à la technologie RAT au moyen d'une technique d'interpolation et combinaison des mesures des caractéristiques spécifiques à la technologie RAT.

8. Procédé selon la revendication 7, dans lequel l'étape de combinaison des mesures des caractéristiques spécifiques à la technologie RAT comprend une étape d'application d'une technique de fusion de données.

9. Procédé selon l'une des revendications précédentes, dans lequel ladite étape d'établissement d'une représentation abstraite du canal comprend le calcul d'une ou de plusieurs caractéristiques abstraites du canal d'une couche physique ou d'une couche de liaison de données de la communication sur ledit canal de communication.

10. Procédé selon la revendication 9, dans lequel ladite représentation abstraite du canal comprend lesdites caractéristiques abstraites calculées du canal sur une couche physique ou une couche de liaison de données de la communication sur ledit canal de communication, incluant une ou plusieurs des caractéristiques abstraites du canal, une plage de largeur de bande applicable, un taux d'échantillonnage applicable et une plage de sensibilité du récepteur applicable.

11. Procédé selon la revendication 9 ou 10, dans lequel ladite représentation abstraite du canal est enregistrée dans un tableau (164) avec des informations sur l'environnement et sur la précision des caractéristiques du canal enregistrées.

12. Procédé selon l'une des revendications précédentes, comprenant en outre une étape de dérivation d'une caractéristique spécifique à la technologie RAT sur la base de la représentation abstraite du canal.

13. Un appareil pour l'exécution des étapes du procédé selon l'une des revendications précédentes, l'appareil comprenant un dispositif de traitement adapté pour exécuter l'étape d'établissement de la représentation abstraite du canal pour la communication entre les au moins deux partenaires de communication (PL, PV1 - PV4) sur la base des caractéristiques spécifiques à la technologie RAT dans le procédé selon l'une des revendications précédentes.

14. Véhicule comprenant un appareil selon la revendication 13.

15. Programme informatique comprenant un code de programme qui, lorsqu'il est exécuté dans un dispositif de traitement, effectue les étapes d'établissement de la représentation abstraite du canal pour la communication entre les au moins deux partenaires de communication (PL, PV1 - PV4) sur la base des caractéristiques spécifiques à la technologie RAT du procédé selon l'une des revendications 1 à 12.
